# EUROPÄISCHE PATENTANMELDUNG

(11) **EP 3 974 678 A1**
(43) Veröffentlichungstag der Anmeldung: **30.03.2022**
(21) Anmeldenummer: 20198442.4
(22) Anmeldetag: 25.09.2020
(51) Int. Cl.: F16H 1/46, F16H 57/025

(54) **GETRIEBE MIT MODULAREM GEHÄUSE, GENERATORGETRIEBE, WINDKRAFTANLAGE, INDUSTRIE-APPLIKATION UND COMPUTERPROGRAMMPRODUKT**

(71) Anmelder: Flender GmbH, 46395 Bocholt (DE)
(72) Erfinder: Daners, Dominikus, 45701 Herten (DE); Gettler, Ralf, 46325 Borken (DE); Telaar, Carolin, 46419 Isselburg (DE)
(74) Vertreter: Michalski Hüttermann & Partner Patentanwälte mbB

(57) **Zusammenfassung**

Die Erfindung betrifft ein Getriebe (10), das eine Mehrzahl an Getriebestufen (20,30,40) umfasst, die jeweils eine Gehäusekomponente (22,32,42) umfassen und axial hintereinander angeordnet sind. Erfindungsgemäß sind zumindest zwei Gehäusekomponenten (22,32,42) durch ein Zugelement (14) lösbar miteinander verbunden, das sich in einer Axialrichtung (45) vollständig durch zumindest eine der Gehäusekomponenten (22, 32,42) erstreckt. Die Erfindung betrifft auch ein Generatorgetriebe (60), das als Getriebeeinheit (11) über ein entsprechendes Getriebe (10) verfügt. Darüber hinaus betrifft die Erfindung eine Windkraftanlage (70), die mit einem solchen Generatorgetriebe (60) ausgestattet ist und eine Industrie-Applikation (80), die über ein erfindungsgemäßes Getriebe (10) verfügt. Ferner betrifft die Erfindung ein Computerprogrammprodukt (90), das zu einem Simulieren eines Betriebsverhaltens eines solchen Getriebes (10) ausgebildet ist.

## Beschreibung

Die Erfindung betrifft ein Getriebe mit einem modularen Gehäuse und ein Generatorgetriebe, das über ein solches Getriebe als Getriebeeinheit verfügt. Die Erfindung betrifft auch eine Windkraftanlage, die mit einem derartigen Generatorgetriebe ausgestattet ist, eine Industrie-Applikation mit einem erfindungsgemäßen Getriebe, und ein Computerprogrammprodukt zur Simulation eines erfindungsgemäßen Getriebes.

Aus der Patentschrift EP 2 479 458 B1 ist ein modular aufgebautes Planetengetriebe bekannt, das drei Planetenstufen aufweist, die als eigenständige Module ausgebildet sind, die in einem gemeinsamen Gehäuse angeordnet sind. Die Planetenstufen sind antriebsseitig über einen Motorflansch mit einem Motor verbindbar ist. Die einzelnen Planetenstufen sind hintereinandergeschaltet angeordnet.

Das Dokument EP 3 258 133 A1 offenbart ein Planetengetriebemodul, das ein Hohlrad, einen Planetenträger mit Planetenrädern, und ein Sonnenrad umfasst. Die einzelnen Planetengetriebemodule sind durch Hintereinanderschalten zu mehrstufigen Planetengetrieben kombinierbar.

Es bestehen in unterschiedlichen technischen Gebieten Anforderungen an Getriebe in puncto steigender Leistungsfähigkeit, Langlebigkeit, Wirtschaftlichkeit, Montagefreundlichkeit und Wartungsfreundlichkeit. Dies gilt auch für Planetengetriebe, insbesondere solche, die in Windkraftanlagen eingesetzt werden. Der Erfindung liegt die Aufgabenstellung zugrunde, ein Getriebe bereitzustellen, das in zumindest einem der skizzierten Anforderungen eine Verbesserung bietet.

Die Aufgabenstellung wird durch ein erfindungsgemäßes Getriebe gelöst, das eine Mehrzahl an Getriebestufen aufweist, die jeweils eine Gehäusekomponente umfassen. Die Getriebestufen sind axial, also entlang einer Hauptdrehachse des Getriebes, hintereinander angeordnet. Die Gehäusekomponenten stützen sich in Axialrichtung damit aneinander ab. Die Getriebestufen sind drehmomentübertragend miteinander verbunden und verwirklichen so im Zusammenspiel die Wirkung des Getriebes. Erfindungsgemäß sind zumindest zwei Gehäusekomponenten durch ein Zugelement lösbar miteinander verbunden. Das Zugelement erstreckt sich in der Axialrichtung vollständig durch zumindest eine der Gehäusekomponenten. Als Zugelement ist hierbei jegliches Konstruktionselement zu verstehen, das durch eine Rückstellkraft, die sich aus einer Zugbeanspruchung ergibt, eine Druckkraft auf die miteinander verbundenen Gehäusekomponenten ausübt und aneinanderdrückt. Ein solches Zugelement kann beispielsweise stabförmig ausgebildet sein. Das Montieren der Gehäusekomponenten der Getriebestufen mit zumindest einem Zugelement erlaubt es, eine Bauteilanzahl im Getriebe zu reduzieren und die zur Montage des Getriebes erforderlichen Montageschritte zu reduzieren. Darüber hinaus sind Zugelemente einfache Konstruktionselemente, deren mechanisches Verhalten, insbesondere deren Elastizitätsverhalten und Relaxationsverhalten, zuverlässig vorhersagbar sind. Dementsprechend kann eine in puncto Lebensdauer ausreichende Dimensionierung der Zugelemente in einfacher Weise präzise durchgeführt werden. Dies wiederum erlaubt es, die Zugelemente gewichtssparend auszubilden. Des Weiteren sind Zugelemente kompakt im Durchmesser und erlauben es, auch eine Vielzahl an Zugelementen zur Montage von Gehäusekomponenten einzusetzen. Dadurch wird ein hohes Maß an Skalierbarkeit erzielt.

In einer Ausführungsform des beanspruchten Getriebes weist ein Ende des Zugelements ein Gewinde auf. Das Gewinde ist dazu ausgebildet, in ein Gewinde eingeschraubt zu werden, das in einer Bohrung in einer Gehäusekomponente ausgebildet ist. Das Ende des Zugelements, das bei der Montage in die Gehäusekomponenten geschoben wird, ist somit in einfacher Weise in einer der Gehäusekomponenten befestigbar. Dadurch kann das Gewinde in der entsprechende Gehäusekomponente im Wesentlichen über die gesamte axiale Abmessung der Gehäusekomponente ausgebildet werden. Je länger ein Gewinde ist, umso höher ist es auf Zugbeanspruchung belastbar. Korrespondierend hierzu ist das Gewinde am Ende des Zugelements ausbildbar. Folglich ist durch das Zugelement eine hohe Montagekraft erzielbar, durch die die Getriebestufen zusammengedrückt werden.

Darüber hinaus kann in zumindest einer der Gehäusekomponenten ein Hohlrad drehfest aufgenommen sein. Die entsprechende Getriebestufe ist damit als Planetenstufe ausgebildet, in der ein Planetenträger mit Planetenrädern und ein Sonnenrad aufgenommen ist. Das Hohlrad kann auch einstückig mit der Gehäusekomponente ausgebildet sein. Das Zugelement erstreckt sich somit in einem radialen Randbereich durch die Getriebestufe, was eine hohe Arretierungswirkung gegen Torsion zwischen den Getriebestufen bietet. Darüber hinaus können die Gehäusekomponenten im Wesentlichen den gleichen Außendurchmesser aufweisen, was wiederum zu im Wesentlichen gleichen Durchmessern der Hohlräder führt. Je höher der Hohlraddurchmesser einer Planetenstufe ist, umso kürzer kann die Planetenstufe in Axialrichtung ausgebildet werden. Demzufolge ist das beanspruchte Getriebe in Axialrichtung kurz ausbildbar. Eine solche Bauraumersparnis in Axialrichtung ist für eine Vielzahl an Anwendungen vorteilhaft, insbesondere bei einem Einsatz des beanspruchten Getriebes in einer Windkraftanlage. Alternativ oder ergänzend kann zumindest eine der Gehäusekomponenten als Verbindungsflansch ausgebildet sein. Ein Verbindungsflansch ist dazu ausgebildet, Gehäusekomponenten miteinander zu verbinden, in denen jeweils ein Hohlrad angeordnet ist. Verbindungsflansche sind beiden Planetenstufen zurechenbar, die sie miteinander verbinden. An einem Verbindungsflansch können Wandungen angeformt sein, die sich ins Innere des Getriebes erstrecken und beispielsweise die Montage von Lagern ermöglichen.

In einer weiteren Ausführungsform des beanspruchten Getriebes ist das Zugelement als Stiftschraube ausgebildet. Die Stiftschraube verfügt an ihren beiden Endbereichen jeweils über ein Gewinde, so dass die Stiftschraube an einem Ende durch eine Mutter spannbar ist. Stiftschrauben sind als genormte Komponenten kosteneffizient verfügbar und sind erprobt, was eine exakte Prognostizierbarkeit über deren Beanspruchbarkeit und Lebensdauer erlaubt. Die Stiftschraube ist darüber hinaus in einfacher Weise skalierbar, so dass die beanspruchte Lösung auf Getriebe in unterschiedlichen Größendimensionen anwendbar ist. Insbesondere erlaubt die Reduzierung an Bauteilen es, die Stiftschrauben aus besonders beanspruchbaren Materialien herzustellen. Es wird so ein belastungsgerechte Materialeinsatz verwirklicht, bei dem die Verwendung von kostenintensiven Materialien gerechtfertigt ist.

Ferner kann das Zugelement an einer Stirnfläche einer der Getriebestufen zugänglich angeordnet sein. Die Stirnfläche der Getriebestufen ist auch in einem montierten Zustand noch einfach zugänglich, was es erlaubt, die Zugelemente in einem wählbaren Stadium der Montage anzuziehen, und/oder nachzuziehen. Die Herstellung des beanspruchten Getriebes wird so weiter vereinfacht. Ferner erlaubt das an der Stirnseite einer der Getriebestufen zugänglich angeordnete Zugelement auch eine einfache Wartung oder Reparatur des Getriebes. Infolge der verbesserten Zugänglichkeit kann eine Mutter am Zugelement auch torsionsfrei angezogen werden. Ein derartiges torsionsfreies Anziehen ist hydraulisch durchführbar, beispielsweise durch drehungsfreies geradliniges Dehnen des Zugelements, anschließendem Zustellen der Mutter, und hydraulischem Entlasten des Zugelements. Hierdurch ist eine vom Zugelement ausgeübte Druckkraft auf die Gehäusekomponenten exakt einstellbar. Bei Verwendung von mehreren Zugelementen am beanspruchten Getriebe wird dadurch eine gleichmäßige Verteilung der jeweiligen Montagevorspannkräfte, also der Zugbeanspruchungen, in den Zugelementen erreicht. Dies ermöglicht wiederum die Verwendung von langen Zugelementen. Demzufolge kann zumindest eines der Zugelemente mit einer torsionsfrei angezogenen Mutter versehen sein.

In einer weiteren Ausführungsform des beanspruchten Getriebes ist die Stirnfläche, an der das Zugelement zugänglich ist, im Bereich einer Taillierung der Gehäusekomponente ausgebildet. Die Taillierung ist dazu ausgebildet, dass das dort befindliche Ende des Zugelements zugänglich ist, und dort ein Montageschritt vorgenommen werden kann. Insbesondere ist die Taillierung dazu ausgebildet, dort ein Werkzeug zum Anziehen des Zugelements zu positionieren und einzusetzen. Dies erlaubt es beispielsweise, die Zugelemente dicht aneinander anzuordnen, so dass der für Werkzeuge notwendige Raum dadurch freigehalten wird, dass benachbarte Zugelemente in entgegengesetzter Orientierung in die Gehäusekomponenten eingeschoben werden. Dadurch ist die beanspruchte Lösung in puncto Beanspruchbarkeit in einfacher Weise skalierbar, was ein breites mögliches Einsatzspektrum bietet.

Ferner kann das beanspruchte Getriebe eine durchmesserspezifische Drehmomentdichte von 1,1 kW/mm bis 2,5 kW/mm, insbesondere von 1,2 kW/mm bis 2,4 kW/mm, aufweisen. Unter der durchmesserspezifischen Drehmomentdichte ist das Verhältnis zwischen einem Nenneingangsdrehmoment des Getriebes und dessen Außendurchmesser an der größten Getriebestufe, insbesondere der ersten Getriebestufe, aufzufassen. Die größte Getriebestufe ist dabei die Getriebestufe des Getriebes mit dem höchsten Eingangsdrehmoment. Die durchmesserspezifische Drehmomentdichte stellt ein Maß für die Kompaktheit des Getriebes dar. Die beanspruchte Lösung erlaubt es, die Montage von derart leistungsfähigen und kompakten Getrieben zu beschleunigen und zu vereinfachen. Dadurch werden eine Gewichtsersparnis und eine gesteigerte Kosteneffizienz für Getriebe in derartigen Leistungsklassen, also entsprechenden durchmesserspezifischen Drehmomentdichten, erzielt, was wiederum deren praktikable Einsatzmöglichkeiten erhöht. Insbesondere wird die Verwendung von Generatorgetrieben, in denen eine Getriebeeinheit und eine Generatoreinheit integriert sind, wirtschaftlicher.

Die zugrundeliegende Aufgabenstellung wird auch durch ein erfindungsgemäßes Generatorgetriebe gelöst, das eine Getriebeeinheit und einer Generatoreinheit umfasst. Die Getriebeeinheit ist lösbar mit der Generatoreinheit verbunden. Dazu kann eine Gehäusekomponente der Getriebeeinheit mit einer Gehäusekomponente der Generatoreinheit lösbar verbunden sein. Erfindungsgemäß weist die ein Getriebe auf, das gemäß einer der oben skizzierten Ausführungsformen des beanspruchten Getriebes ausgebildet ist. Die Verwendung eines solchen Getriebes ermöglicht es insbesondere, gewichtssparend und baulängensparend, dieses mit einer Generatoreinheit zu verbinden. Das so gebildete Generatorgetriebe ist in einem Stück als Ganzes in einer Windkraftanlage montierbar. Dadurch wiederum können in einfacher Weise die technischen Vorzüge einer Generatoreinheit genutzt werden, die an der Getriebeeinheit vormontiert ist. Insbesondere ist so zwischen der Getriebeeinheit und der Generatoreinheit eine präzise Abstimmung und Einstellung möglich. Aufwendige Einstellarbeiten bei der Montage in der Windkraftanlage werden vermieden.

In einer Ausführungsform des beanspruchten Generatorgetriebes weist das Getriebe, das zur Getriebeeinheit gehört, drei hintereinandergeschaltete Getriebestufen auf, die als Planetenstufen ausgebildet sind. Die Planetenstufen sind derart hintereinandergeschaltet, dass eine zugeführte Antriebsleistung zwischen den Planetenstufen unverzweigt durch das Getriebe transportiert wird. Das Getriebe kann folglich als Planetengetriebe im Sinne der Internationalen Anmeldung WO 2020/001942 A1 ausgebildet sein. Der Offenbarungsgehalt von WO 2020/001942 A1 wird durch Verweisung in die vorliegende Anmeldung miteinbezogen. Ein Getriebe mit drei hintereinandergeschalteten Planetenstufen bietet eine günstige Standübersetzung, die auch den Betrieb eines Generators mit einer Drehzahl von 600 U/min bis 800 U/min erlaubt. Die Generatoreinheit kann dementsprechend eine Nenndrehzahl von 600 U/min bis 800 U/min aufweisen.

In einer weiteren Ausführungsform des beanspruchten Generatorgetriebes ist das Zugelement an einem Ende zu einem Ausüben einer Druckkraft auf die Gehäusekomponenten mit einer Gehäusekomponente der Generatoreinheit verbunden. Dazu kann das Ende des Zugelements in einem Gewinde aufgenommen sein, das in der Gehäusekomponente der Generatoreinheit ausgebildet ist, oder mit einer Mutter zusammenwirken, über die die Druckkraft an einer Stirnfläche der Getriebeeinheit oder der Generatoreinheit ausgeübt wird. Durch die Stützwirkung des Gewindes in der Gehäusekomponente der Generatoreinheit bzw. die Mutter an der Stirnseite wird die Zugbeanspruchung im Zugelement in eine Druckkraft auf die Gehäusekomponenten der Getriebeeinheit und der Generatoreinheit umgesetzt.

Ferner kann sich das Zugelement im beanspruchten Generatorgetriebe durch jede Gehäusekomponente erstrecken. Ein solches Zugelement übt auf sämtliche Module, also die einzelnen Getriebestufen der Getriebeeinheit, und die Generatoreinheit eine Druckkraft als Haltekraft aus. Je mehr Getriebestufen die Getriebeeinheit aufweist, umso höher ist gegenüber einer Flanschkonstruktion, wie im Stand der Technik bekannt, die Ersparnis an Bauteilen und Montageschritten. Hierdurch wird bei der Montage des beanspruchten Generatorgetriebes der höchste Zugewinn an Wirtschaftlichkeit erzielt. Alternativ oder ergänzend kann das Getriebe auch Zugelemente unterschiedlicher Länge aufweisen, die sich vollständig nur durch eine, zwei, usw. Gehäusekomponenten erstrecken.

Die Aufgabenstellung wird ebenso durch eine erfindungsgemäße Windkraftanlage gelöst. Die Windkraftanlage umfasst eine Gondel, an der drehbar ein Mehrblattrotor angeordnet ist. In der Gondel ist ein Generatorgetriebe aufgenommen, das über eine Hauptwelle mit dem Mehrblattrotor drehmomentübertragend gekoppelt ist. Erfindungsgemäß ist das Generatorgetriebe gemäß einer der oben dargestellten Ausführungsformen ausgebildet.

Weiter wird die Aufgabenstellung durch eine erfindungsgemäße Industrie-Applikation gelöst, die eine Antriebseinheit umfasst, durch die eine Antriebsleistung bereitgestellt wird. Die Antriebseinheit ist drehmomentübertragend über ein Getriebe mit einer Abtriebseinheit gekoppelt, wobei die Antriebsleistung von der Antriebseinheit unter Wandlung von Drehzahl und Drehmoment auf die Abtriebseinheit übertragen wird. Die Antriebseinheit kann beispielsweise als Elektromotor, Verbrennungsmotor oder Hydraulikmotor ausgebildet sein. Die Abtriebseinheit kann als mechanische Anwendung ausgebildet sein, beispielsweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ausgebildet sein. Erfindungsgemäß ist das Getriebe gemäß einer der oben skizzierten Ausführungsformen ausgebildet.

Darüber hinaus wird die zugrundeliegende Aufgabe durch ein erfindungsgemäßes Computerprogrammprodukt gelöst. Das Computerprogrammprodukt ist zu einem Simulieren eines Betriebsverhaltens eines Getriebes ausgebildet und verfügt dazu über Daten, die den Aufbau der Komponenten des Getriebes abbilden. Dazu gehören beispielsweise Abmessungen von verzahnten Komponenten, über die zumindest teilweise Antriebsleistung transportiert wird. Ebenso kann das Computerprogrammprodukt kinematische Bedingungen umfassen, die die Beweglichkeit der einzelnen Komponenten definiert, und/oder ein Physikmodell, das Vorgänge abbildet, die für den vorliegenden Betriebszustand maßgeblich sein können. Hierzu gehört beispielsweise eine mechanische Beanspruchung einer Komponente, deren Bruchfestigkeit, Dauerfestigkeit oder sonstige mechanische Beanspruchbarkeit. Auch ein thermisches Verhalten, beispielsweise im Zusammenspiel mit Planschverlusten in Schmieröl, kann im Computerprogrammprodukt abgebildet werden. Des Weiteren kann das Physikmodell auch ein Schwingungsmodell zum Simulieren unterschiedlicher Schwingungsmoden unterschiedlicher Komponenten des Getriebes umfassen. Das Computerprogrammprodukt kann mit einer Schnittstelle versehen sein, durch die ein vorliegender Betriebszustand, insbesondere eine vorliegende Drehzahl und ein vorliegendes Drehmoment an einer Antriebsseite des Getriebes und/oder Angaben über Schwingungsanregungen des Getriebes als Eingangsdaten vorgebbar sind. Das Computerprogrammprodukt kann auch eine Schnittstelle zum Ausgeben von Resultaten aus dem Physikmodell aufweisen. Ebenso kann das Computerprogramprodukt dazu ausgebildet sein, mit weiteren Computerprogrammprodukten weiterer Komponenten einer Maschine, beispielsweise einer Industrie-Applikation oder einer Windkraftanlage, zusammenzuwirken, um deren Betriebsverhalten zu simulieren. Das Computerprogrammprodukt kann als Digitaler Zwilling, auch Digital Twin genannt, ausgebildet sein. Die Funktionsweise Digitaler Zwillinge ist beispielsweise in der Anmeldung US 2017/0286572 A1 beschrieben. Der Offenbarungsgehalt von US 2017/0286572 A1 wird durch Verweisung in die vorliegende Anmeldung miteinbezogen. Durch das erfindungsgemäße Computerprogrammprodukt ist beispielsweise das mechanische Verhalten eines Zugelements, insbesondere dessen Relaxationsverhalten, simulierbar, und basierend hierauf eine Wartung planbar. Alternativ oder ergänzend ist mittels des erfindungsgemäßen Computerprogrammprodukts auch eine vorteilhafte Anordnung von Zugelementen in einem erfindungsgemäßen Getriebe ermittelbar.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine erste Ausführungsform des beanspruchten Generatorgetriebes im Längsschnitt;
- FIG 2: schematisch eine zweite Ausführungsform des beanspruchten Generatorgetriebes in einer Detailansicht im Längsschnitt;
- FIG 3: schematisch eine dritte Ausführungsform des beanspruchten Generatorgetriebes in einer Detailansicht im Längsschnitt;
- FIG 4: schematisch eine vierte Ausführungsform des beanspruchten Generatorgetriebes in einer Detailansicht im Längsschnitt;
- FIG 5: eine geschnittene Schrägansicht einer Ausführungsform der beanspruchten Windkraftanlage;
- FIG 6: schematisch den Aufbau einer Ausführungsform der beanspruchten Industrie-Applikation.

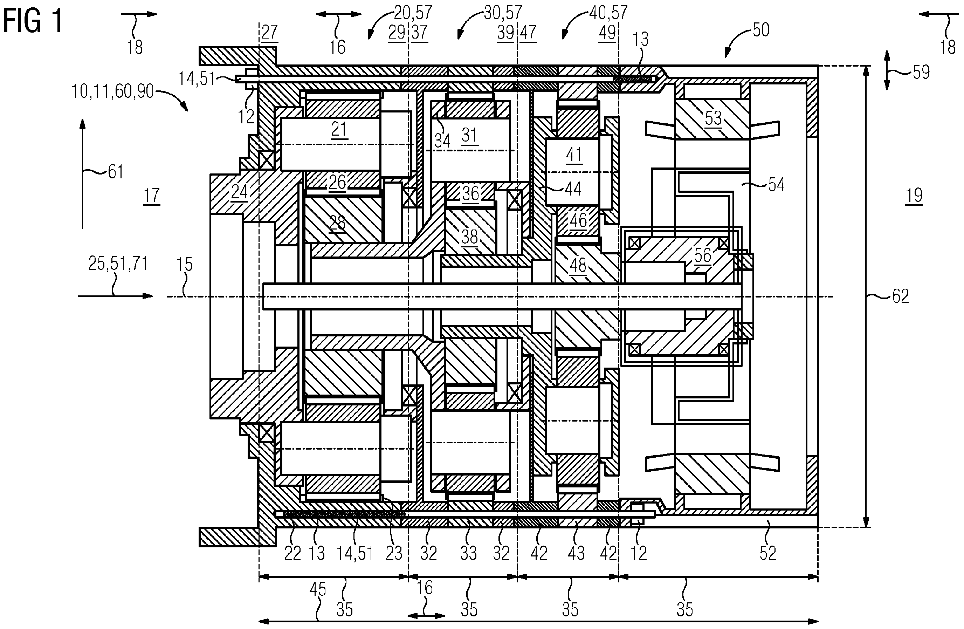

In FIG 1 ist schematisch eine erste Ausführungsform des beanspruchten Generatorgetriebes 60 dargestellt, das als Getriebeeinheit 11 eine Ausführungsform eines beanspruchten Getriebes 10 aufweist und eine Generatoreinheit 50. Das Getriebe 10 umfasst eine erste, zweite und dritte Getriebestufe 20, 30, 40, die entlang einer Axialrichtung 45, also parallel zu einer Hauptdrehachse 15 des Getriebes 10, angeordnet sind. Die erste Getriebeeinheit 20 umfasst ein Hohlrad 23, das in einer Gehäusekomponente 22 drehfest angeordnet ist, einen Planetenträger 24 mit einer Mehrzahl an Planetenradachsen 21, an denen drehbar Planetenräder 26 angeordnet sind, und eine Sonnenrad 28. Die erste Getriebestufe 20 ist somit als Planetenstufe 57 ausgebildet. In analoger Weise umfassen die zweite und dritte Planetenstufe 30, 40 auch jeweils ein Hohlrad 33, 43, das in einer Gehäusekomponente 32, 42 drehfest angeordnet ist, einen Planetenträger 34, 44 mit einer Mehrzahl an Planetenradachsen 31, 41, auf denen Planetenräder 36, 46 drehbar angeordnet sind, und jeweils ein Sonnenrad 38, 48. Darüber hinaus weist das Generatorgetriebe 60 auch Gehäusekomponenten 32, 42 auf, die als Verbindungsflansche 64 ausgebildet sind und Gehäusekomponenten 22, 32, 42 miteinander verbinden, in denen jeweils ein Hohlrad 23, 33, 43 angeordnet sind. Die Verbindungsflansche 64 sind jeweils den Planetenstufen 20, 30, 40 zurechenbar, mit die miteinander verbinden bzw. der Generatoreinheit 50. Das Sonnenrad 28 der ersten Getriebestufe 20 ist drehmomentübertragend mit dem Planetenträger 34 der zweiten Getriebestufe 30 verbunden, so dass eine Antriebsleistung 25, die der ersten Planetenstufe 20 über eine Hauptwelle 71 zugeführt wird, unverzweigt auf den Planetenträger 34 der zweiten Getriebestufe 34 übertragen wird. In analoger Weise ist das Sonnenrad 38 der zweiten Getriebestufe 30 drehmomentübertragend mit dem Planetenträger 44 der dritten Getriebestufe 40 verbunden. Die Antriebsleistung 25 wird von einer Antriebsseite 17 in Richtung einer Abtriebsseite 19 unter Reduzierung des Drehmoments und Steigerung der Drehzahl über eine Kupplung 56 auf einen Rotor 54 der Generatoreinheit 50 übertragen. Der Rotor 54 ist zur Gewinnung von Elektrizität drehbar in einem Stator 53 aufgenommen. Der Stator 53 wiederum ist drehfest in einer Gehäusekomponente 52 der Generatoreinheit 50 angeordnet.

Die Gehäusekomponenten 22, 32, 42 der Getriebestufen 20, 30, 40 der Getriebeeinheit 11 und die Gehäusekomponente 52 der Generatoreinheit 50 sind axial hintereinander angeordnet, so dass die Gehäusekomponenten 22, 32, 42, 52 in einem radialen Randbereich 59 fluchten. Die Radialrichtung ist auf die Hauptdrehachse 15 bezogen und in FIG 1 durch den Pfeil 61 versinnbildlicht. Die Gehäusekomponenten 22, 32, 42, 52 sind in den radialen Randbereichen 59 jeweils im Bereich des Hohlrads 23, 33, 43 mit mindestens einer Ausnehmung 51 versehen. Die Ausnehmungen 51 sind fluchtend ausgerichtet, also angeordnet. Durch die Ausnehmungen 51 erstreckt sich ein Zugelement 14, das im Wesentlichen stabförmig ist und als Stiftschraube ausgebildet sein kann. Eines der Zugelemente 14 ist an einem Ende mit einem Gewinde 13 versehen, das axialkraftübertragend in einem Gewinde 13 in der Gehäusekomponente 52 der Generatoreinheit 50 aufgenommen ist. An einem entgegengesetzten Ende des Zugelements 14 ist dieses mit einer Mutter 12 versehen, durch die das in FIG 1 oben dargestellte Zugelement 14 gespannt wird und so als Rückstellkraft eine Zugkraft 16 ausübt. Ein weiteren Zugelement 14 ist an einem Ende mit einem Gewinde 13 versehen, das axialkraftübertragend in einem Gewinde 13 in der Gehäusekomponente 22 der ersten Getriebestufe 20 aufgenommen ist. Am entgegengesetzten Ende ist das Zugelement 14 mit einer Mutter 12 versehen, durch das das Zugelement 14 vorgespannt ist. Dementsprechend wird durch das Zugelement 14, das in FIG 1 unten abgebildet ist, auch eine Zugkraft 16 ausgeübt. Die so ausgeübten Zugkräfte 16 führen dazu, dass auf die Gehäusekomponenten 22, 32, 42, 52 der Getriebeeinheit 11 und der Generatoreinheit 50 eine Druckkraft 18 ausgeübt wird, durch die diese aneinandergedrückt werden. Die Zugelemente 14 erstrecken sich vollständig durch jeweils drei Gehäusekomponenten 22, 32, 42 der Getriebeeinheit 11, also entlang der gesamten axialen Abmessungen 35 dieser. Eines des Zugelemente 14 ist an einer antriebsseitigen Stirnfläche 27 der Gehäusekomponente 22 der ersten Getriebestufe 20 mit der Mutter 12 versehen, und ist damit an der antriebsseitigen Stirnfläche 27 zugänglich. Zur Montage ist das Zugelement 14 dort mit einem geeigneten Werkzeug greifbar um das Zugelement 14 torsionsfrei anzuziehen. Ein weiteres Zugelement 14 ist von der Generatoreinheit 50 aus zugänglich. Eine solche gegenläufige Anordnung der Zugelemente 14 erlaubt es, diese umlaufend im radialen Randbereich 59 anzuordnen und untereinander mit reduzierter Distanz zueinander beabstanden. Dadurch ist bereits dann Montierbarkeit gegeben, wenn nur jedes zweite Zugelement 14 für ein Werkzeug zum Anziehen zugänglich ist. Durch die Zugelemente 14 wird eine abtriebsseitige Stirnfläche 29 der ersten Getriebestufe 20 gegen eine antriebsseitige Stirnfläche 37 der zweiten Getriebestufe 30 gedrückt. In analoger Weise werden die antriebsseitigen und abtriebsseitigen Stirnflächen 39, 47, 49 und die Generatoreinheit 50 aneinander gedrückt. Die Ausführungsform nach FIG 1 kommt mit einem Minimum an Montagelementen, also Zugelementen 14, aus und erlaubt ein schnelles Montieren der Generatoreinheit 50 an der Getriebeeinheit 11. Die erste, zweite und dritte Getriebestufe 20, 30, 40 und die Generatoreinheit 50 weisen an ihren jeweiligen Gehäusekomponenten 22, 32, 34, 52 einen im Wesentlichen gleichen Außendurchmesser 62 auf. Damit sind die erste, zweite und dritte Getriebestufe 20, 30, 40 gleichermaßen als größte Getriebestufe auffassbar. Der ersten Getriebestufe 20 wird ein Eingangsdrehmoment 51 zugeführt, dass mit dem Außendurchmesser 62 der größten Getriebestufe ein Verhältnis bildet. Dieses Verhältnis aus Eingangsdrehmoment 51 und Außendurchmesser 62 bildet die durchmesserspezifische Drehmomentdichte des Getriebes 10, die im Wesentlichen im Bereich von 1,2 kW/mm bis 2,5 kW/mm, insbesondere von 1,2 kW/mm bis 2,4 kW/mm liegt. Der Außendurchmesser 62 ist ferner derart gewählt, dass die Zugelemente 14 sich im Bereich der jeweiligen Hohlräder 23, 33, 43 durch die Gehäusekomponenten 22, 32, 42 erstrecken, ohne jedoch die Tragfähigkeit der Hohlräder 23, 33, 43 zu reduzieren. Infolgedessen weisen die zweite und dritte Getriebestufe 30, 40 jeweils eine geringere axiale Abmessung 35 als die erste Getriebestufe 20 auf. Dadurch wird für das Generatorgetriebe 60 entlang der Axialrichtung 45 eine reduzierte Abmessung erzielt. Zumindest der Aufbau des Getriebes 10 ist ferner in einem Computerprogrammprodukt 90 gespeichert, das dazu ausgebildet ist, das Betriebsverhalten des Getriebes 10 zu simulieren.

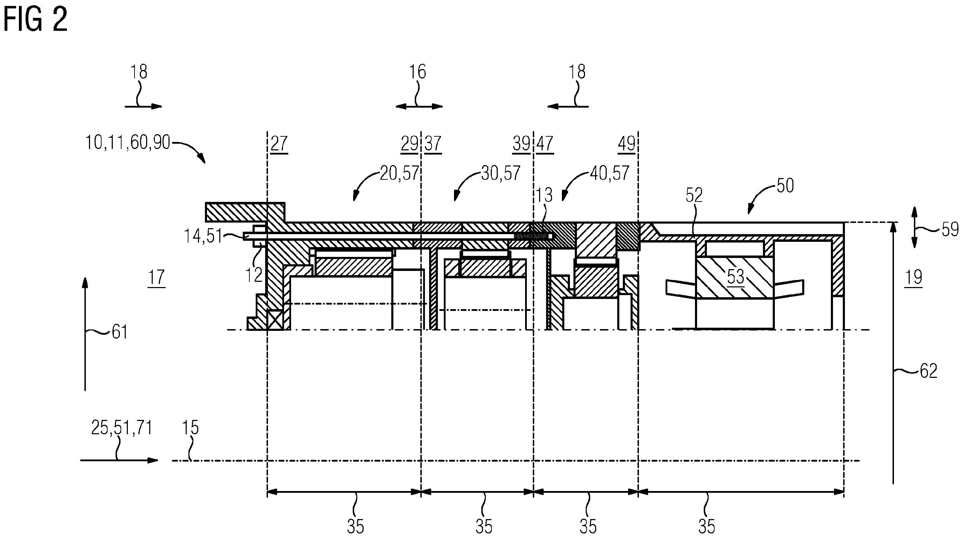

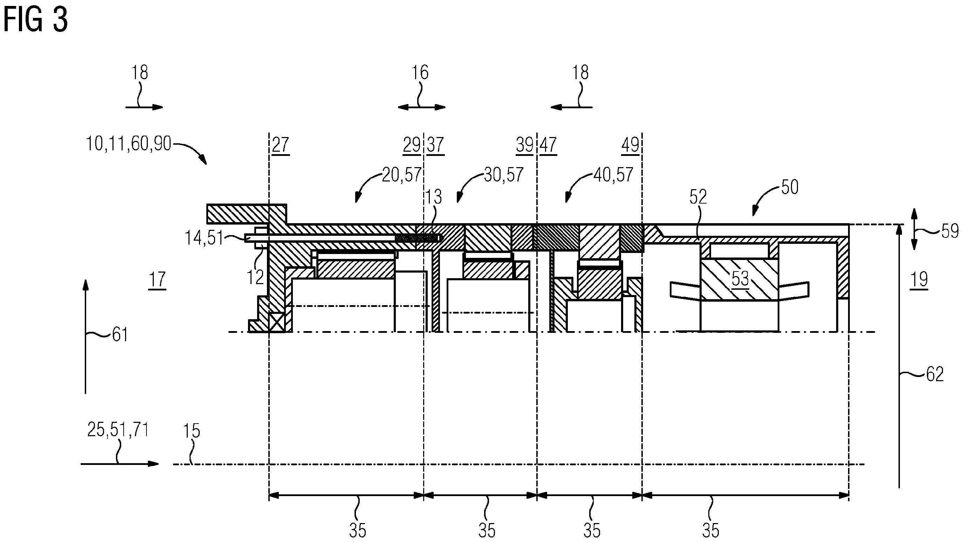

In FIG 2 und FIG 3 sind eine zweite und eine dritte Ausführungsform des beanspruchten Generatorgetriebes 60 in einer Detailansicht im Längsschnitt abgebildet. Das Zugelement 14 in FIG 2 erstreckt sich vollständig durch die Gehäusekomponenten 22, 32 der ersten und zweiten Getriebestufe 20, 30. Das umfasst die Gehäusekomponenten 22, 32, in denen Hohlräder 23, 33 der ersten und zweiten Planetenstufe 20, 30 angeordnet sind, als auch Verbindungsflansche 64, die als Gehäusekomponenten 32, 42 dienen Das Zugelement 14 ist an einem der Abtriebsseite 19 zugewandten Ende mit einem Gewinde 13 versehen, das wiederum in einem Gewinde 13 zugkraftübertragend in Verbindungsflansche 64 der dritten Getriebestufe 40 ausgebildet ist. Dadurch wird über das Zugelement 14 im montierten, also angezogenen Zustand, eine Zugkraft 16, und darüber auf die erste, zweite und dritte Getriebestufe 20, 30, 40 eine Druckkraft 18 ausgeübt und dadurch aneinandergedrückt. In FIG 3 ist eine dritte Ausführungsform des beanspruchten Generatorgetriebes 60 in einer Detailansicht im Längsschnitt gezeigt. Darin erstreckt sich das Zugelement 14 durch die Gehäusekomponente 22 der ersten Getriebestufe 20 und ist an einem der Abtriebsseite 19 zugewandten Ende mit einem Gewinde 13 versehen. Dieses ist wiederum zugkraftübertragend in einem Gewinde 13 aufgenommen, das in einer Gehäusekomponente 32 der zweiten Getriebestufe 30 ausgebildet ist. In einem montierten, also angezogenen Zustand, wirkt auf das Zugelement 14 eine Zugkraft 16, die wiederum zu einer Druckkraft 18 führt, durch die die erste und zweite Getriebestufe 20, 30 aneinandergedrückt werden. Die Ausführungsformen von FIG 2 und FIG 3 sind gemeinsam oder separat mit der Ausführungsform nach FIG 1 kombinierbar.

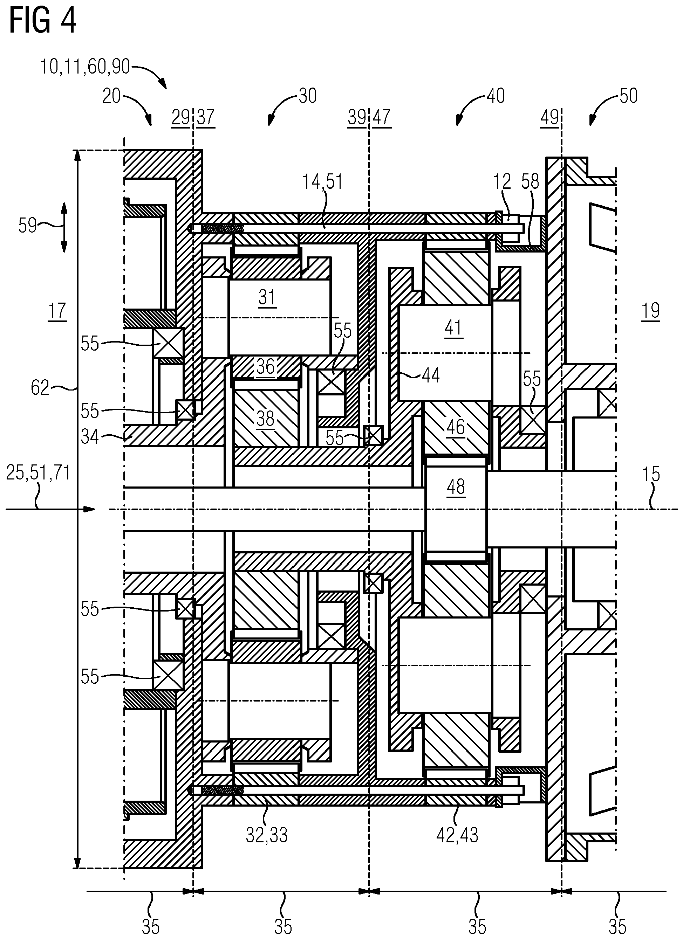

Eine vierte Ausführungsform des beanspruchten Generatorgetriebes 60 in einer Detailansicht im Längsschnitt. Darin ist an der Gehäusekomponente 42 der dritten Getriebestufe 40 eine Taillierung 58 ausgebildet, die zwischen der zweiten Getriebestufe 30 und der Generatoreinheit 50 eine Stirnfläche bereitstellt, an der eine Mutter 12 am Zugelement 14 anbringbar ist. Die Taillierung 58 ist so ausgebildet, dass das Zugelement 14 dort soweit zugänglich ist, dass die Mutter 12 montierbar ist. Mittels der Taillierung 58 wird an der dritten Getriebestufe 40 eine abgesetzte abtriebsseitige Stirnfläche 49 erzeugt. Dadurch ist einstellbar, welche Gehäusekomponenten 22, 32, 42 welcher Getriebestufe 20, 30, 40 durch das entsprechende Zugelement 14 mit einer Druckkraft 18 beaufschlagt wird. Die Ausführungsform nach FIG 4 erlaubt es damit, die Zugelemente 14 in einem Getriebe 10, und damit in einer Getriebeeinheit 11, anforderungsgerecht zu positionieren.

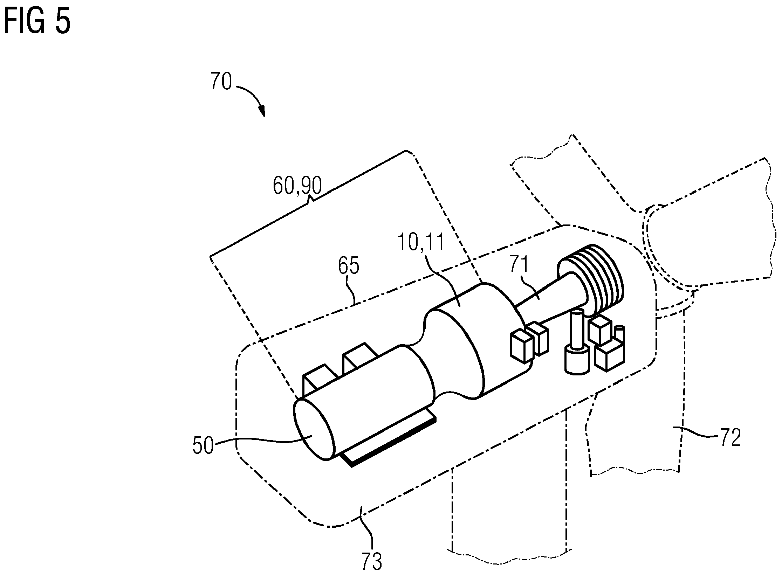

FIG 5 zeigt schematisch den Aufbau einer Ausführungsform der beanspruchten Windkraftanlage 70. Die Windkraftanlage 70 umfasst eine Gondel 73, an der drehbar ein Mehrblattrotor 72 angeordnet ist. Der Mehrblattrotor 72 ist über eine Hauptwelle 71 drehmomentübertragend mit einem Generatorgetriebe 60 verbunden, das eine Getriebeeinheit 11 und eine Generatoreinheit 50 umfasst. Die Getriebeeinheit 11 umfasst ein Getriebe 10, das erfindungsgemäß nach einer der oben skizzierten Ausführungsformen ausgebildet ist.

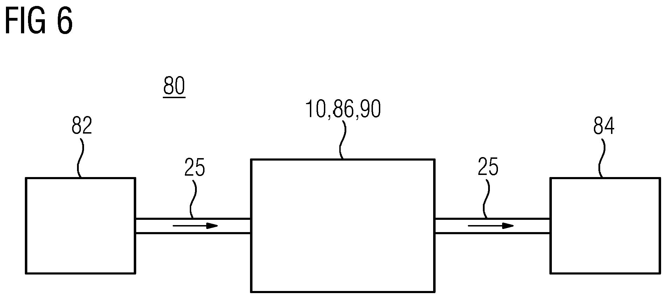

in FIG 6 ist schematisch der Aufbau einer Ausführungsform der beanspruchen Industrie-Applikation 80 dargestellt. Die Industrie-Applikation 80 umfasst eine Antriebseinheit 82, durch die eine Antriebsleistung 25 bereitgestellt wird. Die Antriebseinheit 82 ist drehmomentübertragend über ein Getriebe 86 mit einer Abtriebseinheit 84 gekoppelt, wobei die Antriebsleistung 25 von der Antriebseinheit 82 unter Wandlung von Drehzahl und Drehmoment auf die Abtriebseinheit 84 übertragen wird. Die Antriebseinheit 82 kann beispielsweise als Elektromotor, Verbrennungsmotor oder Hydraulikmotor ausgebildet sein. Die Abtriebseinheit 84 kann als mechanische Anwendung ausgebildet sein, beispielsweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ausgebildet sein. Erfindungsgemäß ist das Getriebe 86 gemäß einer der oben skizzierten Ausführungsformen eines Getriebes 10 ausgebildet.

## Patentansprüche

1. Getriebe (10), umfassend eine Mehrzahl an Getriebestufen (20,30,40), die jeweils mindestens eine Gehäusekomponente (22,32,42) umfassen und axial hintereinander angeordnet sind, **dadurch gekennzeichnet , dass** zumindest zwei Gehäusekomponenten (22,32,42) durch ein Zugelement (14) lösbar miteinander verbunden sind, das sich in einer Axialrichtung (45) vollständig durch zumindest eine der Gehäusekomponenten (22,32,42) erstreckt.

2. Getriebe (10) nach Anspruch 1, **dadurch ge- kennzeichnet** , dass ein Ende des Zugelements (14) ein Gewinde (13) aufweist.

3. Getriebe (10) nach Anspruch 1 oder 2, **dadurch gekennzeichnet , dass** in zumindest einer der Gehäusekomponenten (22,32,42) ein Hohlrad (23,33,43) drehfest angeordnet ist und/oder zumindest eine der Gehäusekomponenten (22,33,43) als Verbindungsflansch (64) ausgebildet ist.

4. Getriebe (10) nach einem der Ansprüche 1 bis 3, **da**- **durch gekennzeichnet** , dass zumindest eine der Getriebestufen (20,30,40) als Planetenstufe (57) ausgebildet ist.

5. Getriebe (10) nach einem der Ansprüche 1 bis 4, **da**- **durch gekennzeichnet** , dass das Zugelement (14) als Stiftschraube ausgebildet ist.

6. Getriebe (10) nach einem der Ansprüche 1 bis 5, **da** - **durch gekennzeichnet** , dass Zugelement (14) an einer Stirnfläche (27,29,37,39,47,49) einer der Getriebestufen (22,32,42) zugänglich angeordnet ist.

7. Getriebe (10) nach Anspruch 6, **dadurch ge**- **kennzeichnet**, dass die Stirnfläche (27,29,37, 39,47,49) der Getriebestufe (20,30,40) im Bereich einer Taillierung (58) der Gehäusekomponente (22,32,42) ausgebildet ist.

8. Getriebe (10) nach einem der Ansprüche 1 bis 7, **da**- **durch gekennzeichnet** , dass das Getriebe (10) eine durchmesserspezifische Drehmomentdichte von 1,1 kW/mm bis 2,5 kW/mm, insbesondere von 1,2 kW/mm bis 2,4 kW/mm aufweist.

9. Generatorgetriebe (60), umfassend eine Getriebeeinheit (11), die mit einer Generatoreinheit (50) lösbar verbunden ist, **dadurch gekennzeichnet , dass** die Getriebeeinheit (11) als ein Getriebe (10) nach einem der Ansprüche 1 bis 8 ausgebildet ist.

10. Generatorgetriebe (60) nach Anspruch 9, **dadurch gekennzeichnet , dass** das Getriebe (10) drei hintereinandergeschaltete Getriebestufen (20,30,40) aufweist, die jeweils als Planetenstufen (57) ausgebildet sind.

11. Generatorgetriebe (60) nach einem der Ansprüche 9 oder 10, **dadurch gekennzeichnet, dass** das Zugelement (14) an einem Ende zu einem Ausüben einer Druckkraft (18) auf die Gehäusekomponenten (22,32,42) mit einer Gehäusekomponente (52) der Generatoreinheit (50) lösbar verbunden ist.

12. Generatorgetriebe (60) nach Anspruch 11, **dadurch gekennzeichnet , dass** sich das Zugelement (14) durch jede Gehäusekomponente (22,32,42) erstreckt.

13. Windkraftanlage (70), umfassend eine Gondel (73), in der ein Generatorgetriebe (60) angeordnet ist, **dadurch gekennzeichnet , dass** das Generatorgetriebe (60) nach zumindest einem der Ansprüche 9 bis 12 ausgebildet ist.

14. Industrie-Applikation (80), umfassend eine Antriebseinheit (82) und eine Abtriebseinheit (84), die über ein Getriebe (86,10) drehmomentübertragend miteinander verbunden sind, **dadurch gekennzeichnet, dass** das Getriebe (86,10) nach einem der Ansprüche 1 bis 8 ausgebildet ist.

15. Computerprogrammprodukt (90) zu einem Simulieren eines Betriebsverhaltens eines Getriebes (10), **dadurch gekennzeichnet , dass** das Getriebe (10) nach einem der Ansprüche 1 bis 8 ausgebildet ist.
